# EUROPÄISCHE PATENTSCHRIFT

(11) **EP 0 497 078 B1**
(45) Veröffentlichungstag und Bekanntmachung des Hinweises auf die Patenterteilung: **28.02.1996**
(21) Anmeldenummer: 91810951.3
(22) Anmeldetag: 06.12.1991
(51) Int. Cl.: B26B 5/00

(54) **Werkzeug zum Schneiden von Isolationsplatten, insbesondere solche aus Fasermaterial**
Tool for cutting insulation panels, especially those made of fibrous material
Outil pour couper des panneaux d'isolation notamment pour ceux constitués d'une matière fibreuse

(30) Priorität: 28.01.1991 CH 255/91; 24.04.1991 CH 1230/91
(43) Veröffentlichungstag der Anmeldung: 05.08.1992
(73) Patentinhaber: Vögele, Richard, CH-4353 Leibstadt (CH)
(72) Erfinder: Vögele, Richard, CH-4353 Leibstadt (CH)
(74) Vertreter: Feldmann, Clarence Paul

(56) Entgegenhaltungen:
- EP-A- 0 132 416
- WO-A-90/05620
- FR-A- 1 233 671
- FR-A- 2 120 206

## Beschreibung

Die vorliegende Erfindung betrifft ein Werkzeug zum Schneiden von Isolationsplatten, insbesondere solche aus Fasermaterial, beispielsweise aus Glas- oder Mineralfaserwolle gemäß den Oberbegriffen der Patentansprüche 1, 8 und 11. Ein derartiges Werkzeug ist aus der FR-A-2 120 206 bekannt. Mit dem zunehmenden Bedürfnis Energie zu sparen, insbesondere Heizenergie, nimmt die Menge, der zu verarbeitenden Isolationsplatten aus Fasermaterial immer mehr zu. Auch die Plattendicke, der zu verarbeitenden Isolationsplatten wird immer stärker. Während anfänglich noch vorwiegend 4-6 cm dicke Isolationsplatten verarbeitet wurden, betragen die heute üblichen Dicken der Isolationsplatten 8-12 cm. Mit der Zunahme der Dicke der Isolationsplatten wird deren Verarbeitung auch immer schwieriger. Liessen sich die anfänglich noch dünnen Isolationsplatten mit beliebigen Messern zuschneiden, so sind nun für die dicken Isolationsplatten spezielle Messer erforderlich, die auch in verschiedenen Varianten auf dem Markt angeboten werden. So hat man festgestellt, dass Messer mit einer gerade geschliffenen Klinge beim Zuschneiden von Isolationsplatten mit einem relativ hohen Raumgewicht schnell stumpf werden. Daher ging man schon bald über zu Messer, deren Klingen mit einem Wellenschliff versehen sind. Ist jedoch der Wellenschliff relativ grob, so lassen sich zwar Isolationsplatten auch mit hohem Raumgewicht relativ leicht schneiden, doch führt der grobe Wellenschliff zu einem Ausfransen der Platten aus Fasermaterial. Deshalb geht man neuerdings dazu über, insbesondere Messer mit einem Doppelwellenschliff zu verwenden. Der hiermit erzeugte Schnitt ist von erheblich besserer Qualität.

Ein zweites Problem besteht darin, dass dicke Platten mit einem hohen Raumgewicht relativ schwer zu schneiden sind. Folgerichtig hat man die Klingen, der für diesen Zweck vorgesehenen Spezialmesser, in letzter Zeit immer dünner gemacht. Dies hat jedoch zu einem unangenehmen Nebeneffekt geführt. Je dünner die Klinge ist, um so weniger widerstandsfähiger ist sie gegen ein Verbiegen. Bedenkt man, dass für dicke Platten zudem relativ lange Klingen benötigt werden, insbesondere auch deshalb, weil man zudem noch eine Sägebewegung durchführen muss, so erhöht sich die Gefahr, dass sich die Klinge beim Schneiden verbiegt und der Schnitt der Platte verläuft.
Neuere Untersuchungen haben gezeigt, dass beim Schneiden der Platten aus Fasermaterial eine erhebliche Menge von Faserstaub entsteht. Gerade mit Messer, deren Klingen einen Wellenschliff aufweisen, ist die Faserstaubentwicklung noch stärker. Die so entstandenen Faserpartikel sind derart leicht, dass sie lange Zeit in der Luft schweben. Reizungen der Atemorgane sind die ersten Merkmale, die festgestellt werden. Bei Facharbeitern, die sich auf die Isolation von Häusern spezialisiert haben, wurden Lungenerkrankungen festgestellt, die im Erscheinungsbild jenen gleichen, bei denen man von einer sogenannten Asbest-Lunge spricht.

Aus der FR-A-2 120 206 ist ein Werkzeug bekannt, bestehend aus zwei in lösbarer Verbindung zueinander stehenden Balken, zwischen denen mindestens zwei Klingen form- und Kraftschlüssig gehalten sind, die in Schneiderichtung eine zunehmende Schneidenlänge aufweisen. Die Klingen haben eine unterschiedliche gestalt um textile gebilden möglichst vorteilhaft schneiden zu können.

Es ist daher die Aufgabe der vorliegenden Erfindung ein gattungsgemäßes Werkzeug zu schaffen, welches insbesondere zum Schneiden von Isolationsplatten aus Fasermaterial geeignet ist, welches die vorgenannten Schwierigkeiten vermeidet und insbesondere eine erheblich geringere Menge von Faserstaub bei deren Verarbeitung bewirkt.

Hierzu schlägt die Erfindung drei Alternativlösungen vor, nämlich eine erste Alternativlösung mit den Merkmalen des Patentanspruches 1 schafft ein Werkzeug, bei dem die Klingen form- und kraftschlüssig gehalten sind, welches einen Führungsbalken umfasst, der eine Führungs- und eine Gleitfläche aufweist. Eine solche Lösung erlaubt insbesondere bei der Verwendung eines im Querschnitt T-förmigen Lineals einen besonders exakten, verlaufsfreien Zuschnitt.

Die zweite alternative Lösung mit den Merkmalen des Patentanspruches 8 schafft ein Werkzeug, bei dem die Klingen ebenfalls form- und kraftschlüssig gehalten sind, welches aber zusätzlich mit einer Gehrungsplatte versehen ist, dank dem Gehrungsschnitte in einem vorgegebenen Winkel durchführbar sind.

Letztlich ist eine dritte alternative Lösung mit den Merkmalen des Patentanspruches 11 aufgezeigt, bei der die Klingen rein kraftschlüssig gehalten sind, wodurch der Neigungswinkel der Klingen variabel ist.

In den beiliegenden Zeichnungen sind einige Ausführungsbeispiele des erfindungsgemässen Werkzeuges dargestellt und anhand der nachfolgenden Beschreibung erläutert. Es zeigt:
- Figur 1: ein Schneidwerkzeug mit zwei Klingen in der Seitenansicht mit Blick auf die Schneideseite und
- Figur 2: in Seitenansicht auf die Führungsseite;
- Figur 3: eine Ansicht des Werkzeuges auf dessen Stirnseite beim Einsatz an einer Isolationsplatte;
- Figur 4: ein Klingenhaltebalken im demontierten Zustand in perspektivischer Darstellung;
- Figur 5: eine Variante des Werkzeuges nach den Figuren 1-4 für besonders dicke Isolationsplatten, welches zusätzlich geeignet ist, um Platten auf Gehrung zu schneiden und mit drei Klingen ausgerüstet ist, was man insbesondere in der
- Figur 6: desselben Werkzeuges in der Seitenansicht auf die Führungsseite des Werkzeuges erkennt.
- Figur 7: eine perspektivische Seitenansicht einer zweiten Variante eines Schneidwerkzeuges;
- Figur 8: eine stirnseitige Ansicht des Werkzeuges nach Figur 7.

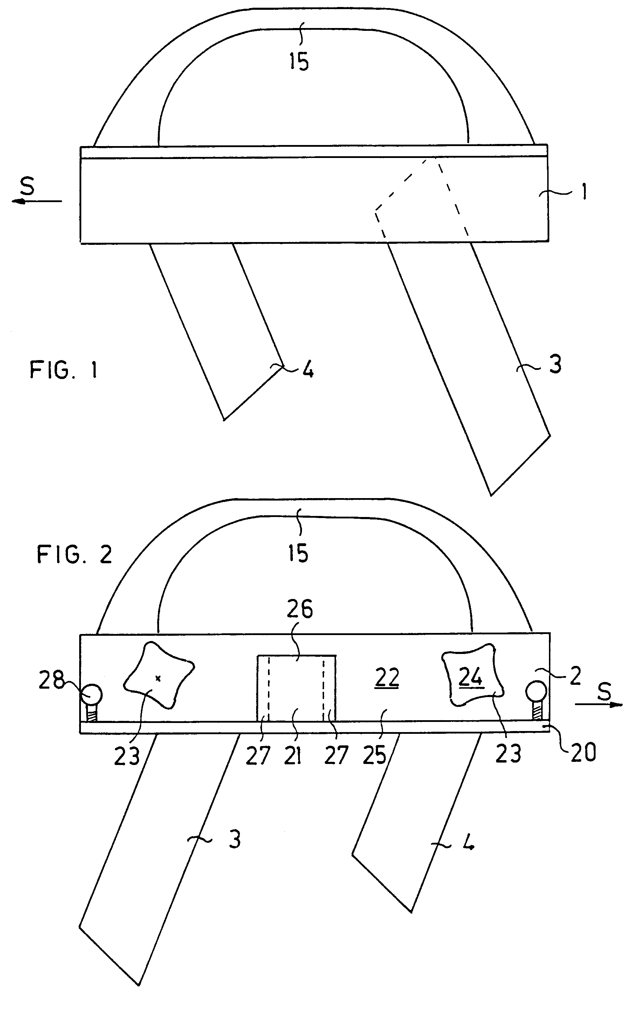

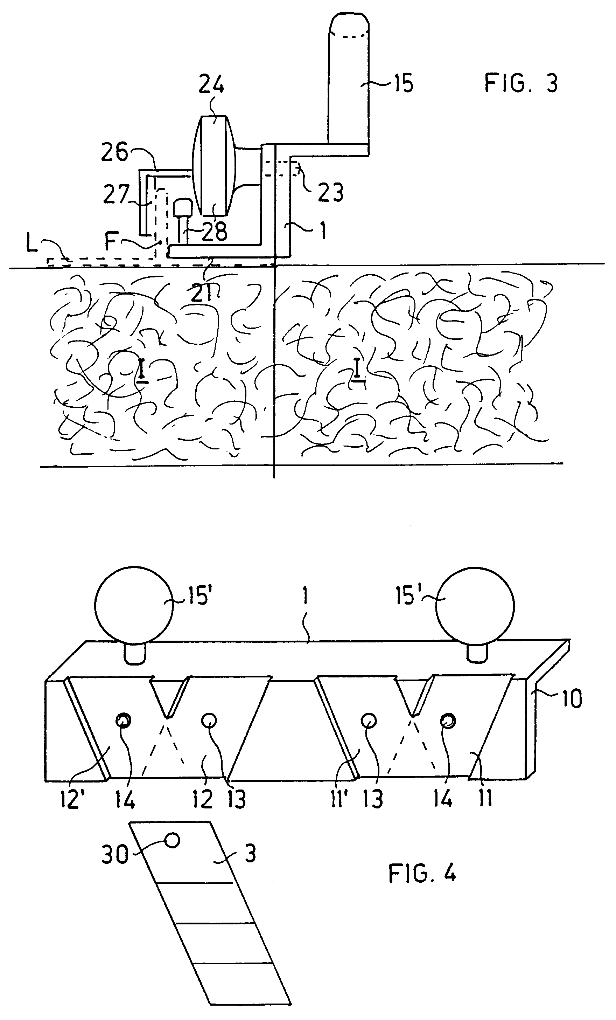

Eine erste, relativ einfache Ausführungsform des erfindungsgemässen Werkzeuges ist in den Figuren 1-4 dargestellt. Der Aufbau des erfindungsgemässen Werkzeuges ist ausserordentlich einfach. Es umfasst im wesentlichen zwei in lösbarer Verbindung zueinander stehenden Balken, zwischen denen mindestens zwei Klingen formschlüssig, oder form- und kraftschlüssig gehalten sind. Der erste Balken ist der sogenannte Klingenhaltebalken 1, während der zweite Balken der sogenannte Führungsbalken 2 ist. Zwischen dem Klingenhaltebalken 1 und dem Führungsbalken 2 sind in dieser Ausführung zwei auswechselbare Klingen 3 und 4 gehalten. Die Halterung erfolgt sowohl formschlüssig als auch kraftschlüssig. Der Klingenhaltebalken 1 ist in der hier dargestellten Ausführungsform aus einem Winkelprofil 10 gefertigt. In der Aussenfläche einer der beiden Schenkel sind verschiedene Bahnen eingelassen. Insgesamt sind bei dieser Variante vier Bahnen dargestellt. Jeweils zwei Bahnen 11 und 12 sind parallel zueinander und verlaufen gegenüber der Vertikalen geneigt. Zwei weitere ebenfalls zueinander parallelen Bahnen 11',12' verlaufen auch geneigt zur Vertikalen und schneiden sich teilweise mit ihrer benachbarten Bahn. Die jeweils benachbarten Bahnen 11,11' und 12,12' sind spiegelsymmetrisch zur gemeinsamen mittigen Vertikalen. Die Breite der Bahnen entsprechen genau der darin aufzunehmenden Austauschklingen 3,4. Die Tiefe der Bahnen ist geringfügig weniger tief als die Auswechselklingen 3,4 dick sind. Auf diese Weise ist sichergestellt, dass die Auswechselklingen 3,4 einerseits in den Bahnen formschlüssig gehalten sind, aber zusätzlich noch durch die Klemmung der beiden Balken 1 und 2 aufeinander auch noch kraftschlüssig gehalten sind. Das erfindungemässe Werkzeug ist so konzipiert, dass als Klingen handelsübliche Austauschklingen verwendet werden können. Solche sind unter dem Namen Cutter-Messer bekannt und werden für verschiedenste Anwendungszwecke, insbesondere zum Zuschneiden von Auslegeteppiche verwendet. Solche Austauschklingen haben den Vorteil, dass sie auf die gewünschte Länge abgebrochen werden können. Entsprechend hat jede Klinge mehrere Sollbruchstellen, die zueinander parallel verlaufen. Zudem weisen solche handelsübliche Austauschklingen an einem Ende eine mittige Durchgangsbohrung 30 auf. Diese lässt sich in der Erfindung vorteilhaft auch noch zur korrekten höhenmässigen Einstellung der Austauschklingen verwenden. Zu diesem Zweck sind in den beiden benachbarten, aber sich nicht schneidenden Bahnen, je ein Bolzen 13 eingelassen, die entsprechend der Dicke der Austauschklingen in den Bahnen hineinragen. In den beiden entsprechenden zu äusserst liegenden Bahnen 11 und 12' sind an den entsprechenden Stellen Gewindelöcher 14 angebracht. In diese Gewindelöcher 14 greifen entsprechende Klemmschrauben 23 vom Führungsbalken 2 aus, ein. Somit übernehmen die Klemmschrauben 23 in diesem Fall die Funktion der Bolzen 13. Die V-förmige Anordnung zweier benachbarten Bahnen hat den Sinn, dass die Austauschklingen verschieden eingespannt werden können. Man wird jedoch vorzugsweise immer beide Klingen parallel zueinander einspannen. Da jedoch erfindungsgemäss die beiden Austauschklingen 3 und 4 unterschiedlich lang sein sollen und die kurze Klinge 4 in Schneiderichtung immer vorn sein soll, ist folglich die Betätigungsrichtung des Werkzeuges vorgegeben. Die Klingen werden immer so eingespannt, dass deren Schneidkante in Schneiderichtung von oben nach unten wegläuft. Mit anderen Worten die Klingen sind bezüglich der Schneiderichtung nach hinten geneigt. Die Schneiderichtung ist in den Figuren 1 und 2 mit einem jeweiligen Pfeil S angedeutet.
Der Führungsbalken 2 ist gleich dem Klingenhaltebalken 1 aus einem Winkelprofil 22 gefertigt. Er hat einen in der Gebrauchslage vertikal verlaufenden und einen in derselben Lage horizontalen Schenkel. Die äussere, untere Fläche des Führungsbalken 2 bildet die Gleitfläche. Hiermit gleitet das Werkzeug bei seiner Benutzung auf einem entsprechend geformten Lineal L. Dieses Lineal ist in der Figur 3 im Schnitt strichliniert dargestellt. Dieses Lineal L hat einen etwa T-förmigen Querschnitt. Der in der Mitte des Lineals etwa vertikal nach oben stehende Schenkel bildet eine Führungsschiene F. Der Abstand von der Aussenkante des Lineals bis zur Führungsschiene F entspricht exakt der Breite des horizontalen Schenkels des Führungsbalkens 2. Um eine einwandfreie Führung des erfindungsgemässen Werkzeuges entlang dem beschriebenen Lineal zu sichern, ist am Führungsbalken 2 ein Führungsbügel 26 angebracht. Der Führungsbügel 26, der beispielsweise am vertikalen Schenkel des Führungsbalkens 2 angeschweisst ist, hat einen L-förmigen Querschnitt. Er überragt distanziert zum horizontalen Schenkel die Führungsfläche 20 und verläuft dann um die Dicke der Führungsschiene F distanziert von der Gleitfläche 21 senkrecht nach unten. Auf diese Weise umgreift das Werkzeug die Führungsschiene dieses speziellen Lineals. Da man beim Schneiden immer vom Anfang des Lineals her schneidet, muss jedesmal die Führungsschiene F eingeführt werden. Um dies zu erleichtern ist der Führungsbügel 26 beidseits mit einer Einführungsstrecke 27 versehen. In diesem Bereich ist der Führungsbügel 26 bezüglich der Schneiderichtung S leicht nach aussen vom Werkzeug weg gerichtet.
Als weitere Besonderheit weist der Führungsbalken 2 in den beiden zu äusserst gelegenen Ecken des horizontalen Schenkels Gewindelöcher auf, die die Gleitfläche 21 durchsetzen. In diesem Gewindelöchern sind Kunststoffschrauben 28 eingesetzt, die soweit eingedreht werden können, dass sie unten aus der Gleitfläche 21 hervorragen. In diesem Fall liegt die Gleitfläche leicht geneigt auf dem Lineal L auf. Entsprechend verlaufen auch die Auswechselklinge 3 und 4 leicht geneigt zur Vertikalen. So lassen sich Schnitte mit einer leichten Gehrung zuschneiden. Dies ist durchaus erwünscht, um gewisse Massungenauigkeiten, die zu unerwünschten Kältebrücken führen können, zu vermeiden. Hiermit lassen sich jedoch nicht echte Gehrungsschnitte, wie sie beispielsweise in Eckbereiche vorkommen, zuschneiden.
Der vertikale Schenkel des Führungsbalkens 2 liegt im montierten Zustand des Werkzeuges an den entsprechenden vertikalen Schenkel des Klingenhaltebalkens 1 an. Zwischen den so aufeinander gepressten Balken 1 und 2 liegen, wie bereits beschrieben die Austauschklingen 3 und 4. Die Verbindung zwischen den beiden Balken wird mit den Klemmschrauben 23 hergestellt, die je einen Drehgriff 24 aufweisen, damit sich die Klingen 3 und 4 auch ohne Hilfe von Werkzeugen auswechseln lassen.
Der Klingenhaltebalken 1 könnte statt der hier dargestellen Form eines Eckprofiles auch aus einem T-Profil gefertigt sein. Dies hätte den Vorteil, dass der Handgriff 15, statt wie bei der hier dargestellen Lösung, genau über den Klingen angebracht sein kann. Hierdurch wird die Gefahr eines Verkantens vermindert. Die Gefahr des Verkantens ist natürlich insbesondere dann vorhanden, wenn ohne das vorher beschriebene Lineal mit Führungsschiene gearbeitet wird.

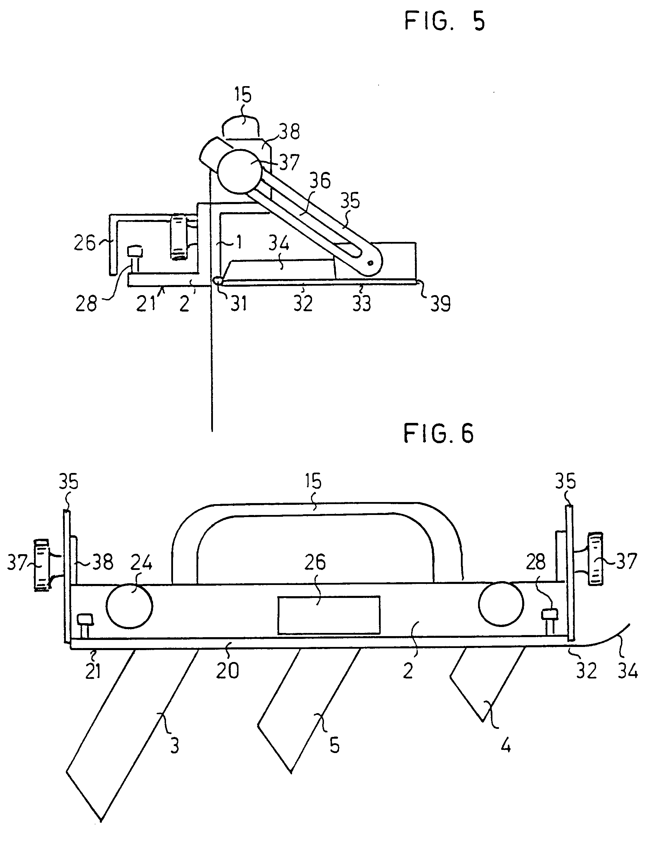

Das in den Figuren 5 und 6 dargestellte Werkzeug gemäss der zweiten, alternativen Ausführung ist für besonders dicke Isolationsplatten konzipiert und erlaubt Gehrungsschnitte mit einem vorgegebenen Winkel. Der generelle Aufbau entspricht jedoch der vorher beschriebenen Ausführung. Folglich wird auf die nochmalige Beschreibung gleichbleibender Teile verzichtet. Für gleichbleibende Teile wurden die gleichen Bezugszeichen verwendet. Da bei besonders dicken Isolationsplatten, die Schnitttiefe pro Austauschklinge bei nur zwei Klingen zu gross wäre, wird hier die gesamte Schnitttiefe auf drei Austauschklingen verteilt. Zu diesem Zweck ist zwischen der vorderen kurzen Klinge 4 und der hinteren, langen Klinge 3 eine mittlere Klinge 5 angeordnet, deren Länge in etwa dem Mittel der beiden äusseren Klingen entspricht. Zu diesem Zweck muss das gesamte Werkzeug auch entsprechend länger sein, nicht zuletzt damit im Klingenhaltebalken 1 genügend Platz für die entsprechenden Bahnen der Austauschklingen 3,4 und 5 vorhanden ist. Neu ist bei dieser Variante, dass unten am vertikalen Schenkel des Klingenhaltebalkens 1 ein Klavierbandscharnier 31 angeordnet ist, welches mit einer Gehrungsplatte 32 in Verbindung steht. Die Gleitfläche 33 der Gehrungsplatte 32 fluchtet exakt mit der Gleitfläche 21 des Führungsbalken 2. Die Gehrungsplatte 32 ist etwas länger als die beiden Balken 1,2 des Werkzeuges. Der in Schneiderichtung vorstehende Teil der Gehrungsplatte 32 hat einen Aufbug 34, der verhindern soll, dass die Isolationsplatte beim Ansetzen des Werkzeuges verletzt werden könnte. Mindestens an einem äussersten Ende der Gehrungsplatte 32 ist ein Arm 35 schwenkbar gelagert angebracht. Der Schwenkarm ist mit einem Längsschlitz 36 versehen, durch den eine Arretierschraube 37 hindurchgreift. Die Arretierschraube 37 ist in einem Gewindeloch in einem Widerlager 38 gehalten. Das Widerlager 38 ist direkt auf dem Klingenhaltebalken 1 beispielsweise aufgeschweisst. Mittels der Arretierschraube 37 lässt sich die Gehrungsplatte 32 in einem beliebigen Winkel im Bereich zwischen 0 und bis mindestens 45° zur Horizontalen arretieren. Hierbei drückt die Arretierschraube 36 den Arm 35 an das Widerlager 38. Der Längsschlitz 36 wird vorzugsweise so ausgelegt, dass die Arretierschraube 37 an dessen oberen Ende anschlägt, wenn die Gehrungsplatte 32 mit der Gleitfläche 21 des Balkens 2 fluchtet.

Wird das Werkzeug für einen Gehrungsschnitt eingesetzt, so ist der Führungsbalken im Prinzip ausser Funktion gesetzt. In diesem Fall dient die äussere Kante 39 der Gehrungsplatte 32 als Führungsfläche. Auf dem Arm 35 liesse sich auch noch ein Reiter anbringen, der als Anschlag dient. Mit einem solchen Reiter könnten mehrere Platten immer wieder mit dem gleichen Gehrungswinkel geschnitten werden. Der Reiter würde dann jeweils am Widerlager 38 anstossen.

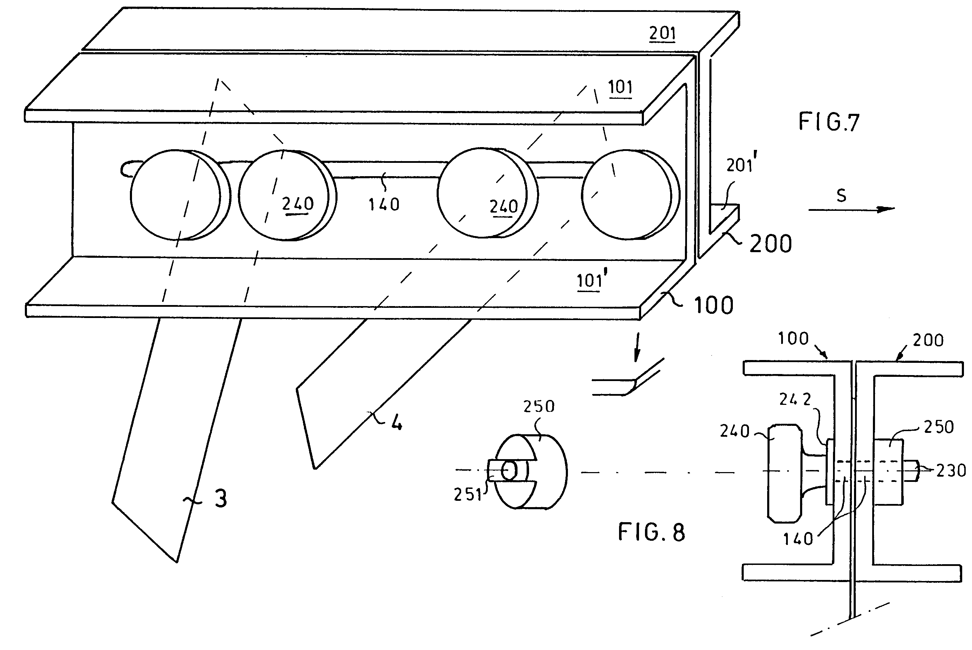

Die Figuren 7 und 8 zeigen die dritte Alternative des Schneidwerkzeuges mit einfachem Aufbau, mit dem nur Schnitte senkrecht zur Plattenoberfläche möglich sind. Das Werkzeug hat dafür den Vorteil, dass sowohl der Abstand als die Neigung der Klingen bezüglich der Schneidrichtung einstellbar sind. Das Werkzeug besteht aus zwei im Querschnitt U-förmigen Balken 100,200, zwischen denen die Klingen 3,4 rein kraftschlüssig gehalten sind, Die Stege beider Balken sind dazu mit einem Längsschlitz 140 versehen, der von Klemmschrauben 230 durchsetzt wird, die einen Drehgriff 240 oder einen Sechskantkopf aufweisen. Am gegenüberliegenden Balken sind Muttern 250 angebracht, die mit einer Rippe 251 versehen sind, die in den Schlitz 140 eingreift, damit sie sich beim Anziehen der Schraube 230 nicht verdreht. Unter dem Drehgriff 240 ist eine glatte Unterlegscheibe 242 angebracht. Zur Sicherstellung einer ausreichenden Klemmung ist jeweils anschliessend oder möglichst nahe vor und hinter der Klinge 3,4 eine solche vorgehend beschriebene Klemmvorrichtung 230, 240,250 angebracht. Auch Versuche mit den dicksten handelsüblichen Isolationsplatten mit einer Stärke von 12 cm und dem höchsten handelsüblichen Raumgewicht ergab ausgezeichnete Resultate, ohne erheblichen Kraftaufwand. Neben den Vorteilen für die Gesundheit der Arbeiter und der besseren Qualität der Arbeit hat sich auch gezeigt, dass das Werkzeug kostensparend ist. Die Austauschklingen sind ausserordentlich preiswert und bleiben erstaunlich lange scharf. Ein Nachschärfen der Austauschklingen ist folglich nicht erforderlich. Dies ganz im Gegensatz zu den heute auf dem Markt erhältlichen Spezialmessern mit einem komplizierten Wellen- oder Doppelwellenschliff.

Aus der Zeichnung ist ersichtlich, dass der Abstand zwischen den vor und hinter der Klinge angebrachten Klemmvorrichtungen mit der Neigung der Klinge variiert. Je steiler der Neigungswinkel ist, umso näher kommen die Klemmvorrichtungen zusammen. Die ist infolge des in den Stegen beider Balken 100,200 angebrachten Längsschlitze ohne weiteres möglich.
Bei dieser einfachen Ausführung benötigt das Werkzeug keinen gesonderten Griff, weil hier die beiden oberen Flanschen 101,201 der Balken gemeinsam einen Griff bilden. In Figur 7 ist die Bewegungsrichtung beim Schneiden durch einen Pfeil S angedeutet. Die vordere Kante der unteren Flansche 101' und 201' sind gerundet, wie in dem durch einen Pfeil angedeutete Detailzeichnung angegeben ist. Damit das Werkzeug auf einer zu schneidenen Platte gleiten kann ohne dessen Oberfläche zu beschädigen. Eine der seitlichen Kanten dieser unteren Flansche dient der Führung entlang einem Lineal. Dies hat den Vorteil, dass das Lineal entweder links oder rechts am Werkzeug angelegt werden kann.

## Patentansprüche

1. Werkzeug zum Schneiden von Isolationsplatten (I), insbesondere solche aus Fasermaterial bestehend aus zwei in lösbarer Verbindung zueinander stehenden Balken (1,2), zwischen denen mindestens zwei Klingen (3 ,4, 5) form- und kraftschlüssig in geneigter Lage gehalten sind, die in Schneiderichtung (S) eine zunehmende Schneidenlänge aufweisen, wobei der eine der beiden zueinander in lösbarer Verbindung stehenden Balken ein Führungsbalken (2) ist, der eine Führungs- (20) und eine Gleitfläche (21) aufweist, und der andere Balken ein Klingenhaltebalken (1) ist, dadurch gekennzeichnet, dass in dem Klingenhaltebalken Bahnen (11, 11'; 12, 12') eingelassen sind, in denen Klingen (3, 4, 5 ) gleicher Schneidkantenform formschlüssig in geneigter Lage gehalten sind, wobei im Klingenhaltebalken (1) je Klinge (3, 4, 5) zwei Bahnen (11, 11'; 12, 12') eingelassen sind, die jeweils bezüglich einer vertikalen Achse spiegelsymmetrisch geneigt zueinander verlaufen.

2. Werkzeug nach Anspruch 1, dadurch gekennzeichnet, dass der Führungsbalken (2) aus einem Winkelprofil (22) gefertigt ist.

3. Werkzeug nach Anspruch 1, dadurch gekennzeichnet, dass die Klingen (3,4) je mindestens eine sie durchsetzende Bohrung (30) aufweisen, und dass im Klingenhaltebalken (1) im Bereich jeder Bahn mindestens je ein Bolzen (13) und eine Gewindebohrung (14) für eine Schraube (23) entsprechend der Bohrung (30) in den Klingen angebracht sind.

4. Werkzeug nach Anspruch 1, dadurch gekennzeichnet, dass die beiden zueinander in lösbarer Verbindung stehenden Balken (1,2) mittels Klemmschrauben (23) mit Drehgriff (24) zusammenpressbar sind.

5. Werkzeug nach Anspruch 1, dadurch gekennzeichnet, dass am Führungsbalken (2) ein Führungsbügel (26) angeordnet ist, der dazu geeignet ist, den vertikalen Schenkel einer im Querschnitt T-förmigen Führungsschiene (F) eines auf die zu schneidende Platte (I) zu legendes Lineal (L) zu übergreifen.

6. Werkzeug nach Anspruch 5, dadurch gekennzeichnet, dass der Führungsbügel (26) mindestens, eine zur Schneiderichtung (S) geneigt verlaufende Einführungsstrecke (27) aufweist.

7. Werkzeug nach Anspruch 2, dadurch gekennzeichnet, dass im Schenkel des Winkelprofiles (22), welcher die Gleitfläche (21) bildet, mindestens ein Gewindeloch angeordnet ist, in welches eine Kunststoffschraube (28), die die Gleitfläche (21) durchsetzt, angebracht ist.

8. Werkzeug zum Schneiden von Isolationsplatten (I), insbesondere solche aus Fasermaterial bestehend aus zwei in lösbarer Verbindung zueinander stehenden Balken (1,2), zwischen denen mindestens zwei Klingen (3 ,4, 5) form- und kraftschlüssig in geneigter Lage gehalten sind, die in Schneiderichtung (S) eine zunehmende Schneidenlänge aufweisen, wobei einer der beiden zueinander in lösbarer Verbindung stehenden Balken ein Klingenhaltebalken (1) ist, dadurch gekennzeichnet, dass in dem Klingenhaltebalken Bahnen (11, 11'; 12, 12') eingelassen sind, in denen Klingen (3, 4, 5) gleicher Schneidkantenform formschlüssig in geneigter Lage gehalten sind, wobei am Klingenhaltebalken (1) mittels eines Scharniers (31) eine neigungsverstellbare Gehrungsplatte (32) angebracht ist, und an der dem Scharnier (31) abgelegenen Seite der Gehrungsplatte (32) mindestens ein Arm (35) schwenkbar befestigt ist, der mittels einer Arretierschraube (37) an einem Widerlager (38) auf dem Klingenbalken (1) feststellbar ist.

9. Werkzeug nach Anspruch 1, dadurch gekennzeichnet, dass es drei Klingen (3, 4, 5) umfasst.

10. Werkzeug nach Anspruch 1, dadurch gekennzeichnet, dass die Klingen handelsübliche, mit Sollbruchstellen versehene Austauschklingen für Cutter-Messer sind.

11. Werkzeug zum Schneiden von Isolationsplatten (I), insbesondere solche aus Fasermaterial, bestehend aus zwei in lösbarer Verbindung zueinander stehenden Balken (1,2), zwischen denen mindestens zwei Klingen (3,4) kraftschlüssig in geneigter Lage gehalten sind, die in Schneiderichtung (5) eine zunehmende Schneidenlänge aufweisen, dadurch gekennzeichnet, dass die beiden in lösbarer Verbindung zueinander stehenden Balken (100,200) je ein U-förmiges Querschnittsprofil aufweisen, zwischen deren auf einander zu gerichteten Stege mindestens zwei Klingen (3,4,5) gleicher Schneidkantenform kraftschlüssig gehalten sind, wozu die Stege beider Balken je mit einem Längsschlitz (140) versehen sind, der von Klemmschrauben (230) durchsetzt ist, für welche im Längsschlitz (140) verschiebbare Muttern angeordnet sind.

## Claims

1. A tool for cutting insulating panels (I), particularly those made from fibrous material, comprising two detachably connected beams (1, 2), between which are held in positive and non-positive manner in an inclined position at least two blades (3, 4, 5), which have an increasing cutting blade length in the cutting direction (S), in which one of the two detachably connected beams is a guide beam (2), which has a guiding face (20) and a sliding face (21), and the other beam is a blade holding beam (1), characterised in that the blade holding beam is formed with paths (11, 11', 12, 12'), in which the blades (3, 4, 5) with the same cutting edge shape are positively held in the inclined position and the blade holding beam (1) is formed with two paths (11, 11', 12, 12') per blade (3, 4, 5) and which, with respect to a vertical axis, are inclined in mirror symmetrical relationship to one another.

2. A tool according to claim 1, characterised in that the guide beam (2) is made from angle section (22).

3. A tool according to claim 1, characterised in that the blades (3, 4) have, in each case, a bore (30) traversing the blade and that in the blade holding beam (1) in the vicinity of each path are provided at least one bolt (13) and a taphole (14) for a screw (23) corresponding to the bore (30) in the blades.

4. A tool according to claim 1, characterised in that the two detachably connected beams (1, 2) can be pressed together by means of clamping screws (23) having a control grip (24).

5. A tool according to claim 1, characterised in that the guide beam (2) is provided with a guide fork (26) engageable over the vertical leg of a cross-sectionally T-shaped guide rail (F) of a rule (L) to be placed on the panel (I) to be cut.

6. A tool according to claim 5, characterised in that the guide fork (26) has at least one introduction path (27) inclined to the cutting direction (S).

7. A tool according to claim 2, characterised in that the side of the angle section (22) forming the sliding face (21) is provided with at least one taphole, in which is fitted a plastics screw (28) which traverses the sliding face (21).

8. A tool for cutting insulating panels (I), particularly those made from fibrous material, comprising two detachably connected beams (1, 2) between which are positively and non-positively held in an inclined position at least two blades (3, 4, 5), which in the cutting direction (S) have an increasing cutting blade length, in which one of the two detachably connected beams is a blade holding beam (1), characterised in that in the blade holding beam are provided paths (11, 11', 12, 12'), in which blades (3, 4, 5) with the same cutting edge shape are positively held in an inclined position and an inclination-adjustable mitre plate (32) is fitted to the blade holding beam (1) by means of a hinge (31) and on the side of the mitre plate (32) remote from the hinge (31) is pivotably mounted at least one arm (35), which can be fixed by means of a locking screw (37) to an abutment (38) on the blade beam (1).

9. A tool according to claim 1, characterised in that it has three blades (3, 4, 5).

10. A tool according to claim 1, characterised in that the blades are commercially available replacement blades for cutting knives equipped with predetermined breaking points.

11. A tool for cutting insulating panels (I), particularly those made from fibrous material, comprising two detachably connected beams (1, 2), between which are frictionally held in an inclined position at least two blades (3, 4) and which have an increasing cutting edge length in the cutting direction (5), characterised in that the two detachably connected beams (100, 200) in each case have a U-shaped cross-sectional profile, between which, on webs directed towards one another, are frictionally held at least two blades (3, 4, 5) having the same cutting edge shape, for which purpose the webs of both beams are in each case provided with an elongated slot (140), which is traversed by clamping bolts (230), for which displaceable nuts are located in the longitudinal slot (140).

## Revendications

1. Outil pour couper des matériaux d'isolation (I), en particulier ceux constitués d'une matière fibreuse, consistant en deux barres (1,2) assemblées entre elles de façon amovible, entre lesquelles sont maintenues en position inclinée avec engagement positif et par adhérence au moins deux lames (3,4,5), qui présentent dans la direction de coupe (S) une longueur de coupe croissante, tandis que l'une des deux barres assemblées entre elles de façon amovible présente une surface de glissement (21), et que l'autre barre est une barre de support de lame (1), caractérisé en ce que dans la barre de support de lame sont ménagés des guides (11,11';12,12') dans lesquels des lames (3,4,5) de même forme d'arête de coupe sont maintenues avec engagement positif en position inclinée, tandis que dans la barre de support de lame (1) pour chaque lame (3,4,5) sont ménagés deux guides (11,11';12,12'), qui sont inclinés l'un par rapport à l'autre dans chaque cas avec symétrie de réflexion par rapport à un axe vertical.

2. Outil selon la revendication 1, caractérisé en ce que la barre de guidage (2) est réalisée à partir d'une cornière (22).

3. Outil selon la revendication 1, caractérisé en ce que les lames (3,4) présentent chacune au moins un trou traversant (30), et que sont mis en place dans la barre de support de lame (1), dans la zone de chaque guide, au moins à chaque fois un boulon (13) et un trou taraudé (14) pour une vis (23) adaptée au trou (30) dans les lames.

4. Outil selon la revendication 1, caractérisé en ce que les deux barres (1,2) assemblées entre elles de façon amovible peuvent être pressées l'une contre l'autre au moyen de vis de serrage (23) à poignée tournante (24).

5. Outil selon la revendication 1, caractérisé en ce que sur la barre de guidage (2) est placé un étrier de guidage (26), approprié pour enjamber la branche verticale d'un rail-guide (F), ayant une section transversale en forme de T, d'une règle (L) à poser sur le matériau à couper (I).

6. Outil selon la revendication 5, caractérisé en ce que l'étrier de guidage (26) présente au moins une section d'entrée (27) inclinée par rapport à la direction de coupe (S).

7. Outil selon la revendication 2, caractérisé en ce que, dans la branche de la cornière (22) qui forme la surface de glissement (21), est disposé au moins un trou taraudé, dans lequel est disposée une vis en matière plastique (28), qui traverse la surface de glissement (21).

8. Outil pour couper des matériaux d'isolation (I), en particulier ceux constitués d'une matière fibreuse, consistant en deux barres (1,2) assemblées entre elles de façon amovible, entre lesquelles sont maintenues en position inclinée avec engagement positif et par adhérence au moins deux lames (3,4,5), qui présentent dans la direction de coupe (S) une longueur de coupe croissante, tandis que l'une des deux barres assemblées entre elles de façon amovible est une barre de support de lame (1), caractérisé en ce que dans la barre de support de lame sont ménagés des guides (11,11';12,12') dans lesquels des lames (3,4,5) de même forme d'arête de coupe sont maintenues avec engagement positif en position inclinée, tandis que sur la barre de support de lame (1) est appliquée au moyen d'une charnière (31) une plaque à onglet réglable en inclinaison (32), et sur la face articulée à la charnière (31) de la plaque à onglet (32) est fixé au moins un bras pivotant (35), qui peut être bloqué au moyen d'une vis d'arrêt (37) sur une butée (38) se trouvant sur la barre pour lame (1).

9. Outil selon la revendication 1, caractérisé en ce qu'il comprend trois lames (3,4,5).

10. Outil selon la revendication 1, caractérisé en ce que les lames sont des lames interchangeables du commerce, pour couteau de type cutter, munies de points destinés à la rupture.

11. Outil pour couper des matériaux d'isolation (I), en particulier ceux constitués d'une matière fibreuse, consistant en deux barres (1,2) assemblées entre elles de façon amovible, entre lesquelles sont maintenues par adhérence en position inclinée au moins deux lames (3,4), qui présentent dans la direction de coupe (S) une longueur de coupe croissante, caractérisé en ce que les deux barres (100,200) assemblées entre elles de façon amovible présentent chacune un profil transversal en forme de U, entre leurs dos tournés l'un vers l'autre sont maintenues par adhérence au moins deux lames (3,4,5) de même forme d'arête de coupe, tandis que les dos des deux barres sont munis chacun d'une fente longitudinale (140), qui est traversée par des vis de serrage (230), pour lesquelles sont disposées dans la fente longitudinale (140) des écrous déplaçables.
